Europäisches Patentamt

European Patent Office

Office européen des brevets

(11) Numéro de publication: **0 505 263 B1**

(12) **FASCICULE DE BREVET EUROPEEN**

(45) Date de publication de fascicule du brevet: **01.02.95** (51) Int. Cl.6: **F02C 3/30**

(21) Numéro de dépôt: **92400706.5**

(22) Date de dépôt: **17.03.92**

(54) **Système à turbine à gaz naturel à vapeur d'eau fonctionnant en cycle semi ouvert.**

(30) Priorité: **18.03.91 FR 9103247**

(43) Date de publication de la demande:
**23.09.92 Bulletin 92/39**

(45) Mention de la délivrance du brevet:
**01.02.95 Bulletin 95/05**

(84) Etats contractants désignés:
**AT BE CH DE DK ES FR GB GR IT LI LU MC NL PT SE**

(56) Documents cités:
**EP-A- 0 278 609        EP-A- 0 318 706**
**WO-A-88/03605        DE-A- 3 331 153**
**GB-A- 2 187 273        US-A- 3 868 818**
**US-A- 4 509 324**

(73) Titulaire: **GAZ DE FRANCE (SERVICE NATIO-NAL)**
**23 rue Philibert-Delorme**
**F-75017 Paris (FR)**

(72) Inventeur: **Guillet, Rémi**
**46 rue Albert Francon**
**F-93380 Pierrefitte (FR)**

(74) Mandataire: **Thévenet, Jean-Bruno et al**
**Cabinet Beau de Loménie**
**158, rue de l'Université**
**F-75340 Paris Cédex 07 (FR)**

Rank Xerox (UK) Business Services
(3.10/3.09/3.3.3)

## Description

La présente invention concerne un système à turbine à gaz naturel comprenant au moins une chambre de combustion équipée d'un brûleur alimenté d'une part en fluide combustible gazeux et d'autre part en air comburant, une turbine de détente munie d'aubes à laquelle sont appliqués les gaz de combustion, un compresseur d'air entraîné par la turbine de détente pour comprimer le flux d'air comburant appliqué audit brûleur et des moyens de couplage de la turbine de détente à au moins un récepteur externe d'énergie mécanique voir WO 88/03605.

Depuis quelques années, on utilise déjà des turbines à gaz à poste fixe, en concurrence avec les turbines à vapeur pour la production d'électricité, notamment dans le cas de cogénération, c'est-à-dire de production simultanée d'un travail mécanique et d'une énergie calorifique.

Actuellement, bien que le rendement global mécanique des turbines à gaz les plus récentes atteigne celui des turbines à vapeur, le rendement des turbines à gaz reste pénalisé par la nécessité, pour la turbine de détente, de produire le travail de compression de l'air. Ce travail est d'autant plus considérable qu'il est apparu nécessaire pour éviter que des gaz trop chauds n'attaquent la turbine, de comprimer avec l'air comburant, un excès d'air souvent supérieur à deux fois le volume de l'air comburant. Actuellement la température limite maximale acceptable par les turbines de détente dépasse 1000°C mais ne peut guère aller au-delà de température de l'ordre de 1250°C.

On notera en outre que le rendement global mécanique de la turbine à gaz est bien entendu très sensible au rendement polytropique du turbo compresseur.

Par ailleurs, à puissance égale, la taille de la turbine de détente des "turbines à gaz" devant d'abord produire le travail d'entraînement du compresseur est notablement supérieure à celle de la turbine à vapeur et croît très vite lorsque son efficacité mécanique décroît.

Enfin, il faut bien entendu un compresseur d'air entraîné par l'arbre de la turbine à gaz, et la taille de ce compresseur croît elle aussi très vite lorsque l'efficacité mécanique du compresseur décroît.

En ce qui concerne l'aspect protection de l'environnement, on sait tous les efforts faits à propos des machines thermiques à combustion pour diminuer les émissions des oxydes d'azote.

Une technique désormais bien connue consiste à agir à la source en "trempant" la flamme avec de l'eau vapeur ou liquide au plus près des zones de réaction.

Toutefois, puisqu'il s'agit d'effectuer un phénomène de trempe, cette injection d'eau doit être parfaitement maîtrisée et est quantitativement limitée pour éviter toute dégradation de la combustion et notamment l'apparition d'oxyde de carbone.

Par ailleurs, la "trempe" de la flamme a une efficacité elle-même limitée, car on joue ici uniquement sur le temps de séjour des éléments portés à hautes températures et susceptibles de s'associer pour former les oxydes d'azote (NOx) sans jouer sur la température maximale atteinte au coeur de la zone en réaction ou température adiabatique de combustion.

La présente invention vise à remédier aux inconvénients précités et à permettre la mise en oeuvre d'un système à turbine à gaz naturel qui permette à la fois de diminuer la taille des machines tournantes utilisées, d'améliorer les performances du point de vue énergétique, mécanique et thermique dans le cas de cogénération, tout en offrant une meilleure protection de l'environnement.

Ces buts sont atteints, conformément à l'invention, grâce à un système à turbine à gaz naturel et vapeur d'eau fonctionnent en cycle semi-ouvert, comprenant au moins une chambre de combustion équipée d'un brûleur alimenté d'une part en fluide combustible gazeux et d'autre part en air comburant, une turbine de détente munie d'aubes à laquelle sont appliqués les gaz de combustion, un compresseur d'air entraîné par la turbine de détente pour comprimer le flux d'air comburant appliqué audit brûleur et des moyens de couplage de la turbine de détente à au moins un récepteur externe d'énergie mécanique, caractérisé en ce qu'il comprend un échangeur massique et thermique entre les produits de combustion issus d'un récupérateur à condensation placé sur le parcours des gaz d'échappement de la turbine de détente et l'air atmosphérique entrant pour permettre une préhumidification de l'air avant son entrée dans le compresseur,

Le système peut en outre comprendre l'un des moyens suivants :

a) un dispositif d'injection de vapeur d'eau disposé dans la zone d'air comburant comprimé située entre la sortie du compresseur d'air et l'entrée du brûleur, la vapeur d'eau injectée étant produite par un récupérateur-générateur-surchauffeur de vapeur disposé sur les gaz d'échappement immédiatement en sortie de la turbine de détente,

b) un dispositif d'injection de vapeur d'eau disposé dans la chambre de combustion après la zone de combustion et avant les premières aubes de la turbine de détente, la vapeur d'eau injectée étant produite par un récupérateur-générateur-surchauffeur de vapeur disposé sur les gaz d'échappement immédiatement en sortie de la turbine de détente,

c) un dispositif d'injection d'eau liquide disposé dans la zone d'air comburant comprimé située entre la sortie du compresseur d'air et l'entrée du brûleur, l'eau liquide étant obtenue à partir du recyclage de l'eau condensée produite dans un récupérateur à condensation placé sur le parcours des gaz d'échappement de la turbine de détente et recueillant l'ensemble des chaleurs sensible et latente des gaz d'échappement,

d) un dispositif d'injection d'eau liquide disposé dans la chambre de combustion après la zone de combustion et avant les premières aubes de la turbine de détente, l'eau liquide étant obtenue à partir du recyclage de l'eau condensée produite dans un récupérateur à condensation placé sur le parcours des gaz d'échappement de la turbine de détente et recueillant l'ensemble des chaleurs sensible et latente des gaz d'échappement.

La totalité de l'eau injectée constitue un ballast thermique dans la chambre de combustion, la quantité d'air comprimé utilisée approchant celle nécessaire à une combustion stoechiométrique.

Excepté l'eau recyclée par l'échangeur massique et thermique ou pompe à vapeur, la totalité de l'eau injectée constituant le ballast thermique en lieu et place de l'excès d'air de combustion habituel chargé de maintenir les gaz comprimés et chauds issus de la combustion en deçà de la température maximale admissible à l'entrée de la turbine de détente est alors comprimée en phase liquide et nécessite une quantité négligeable d'énergie mécanique.

Le système comprend un récupérateur-générateur-surchauffeur de vapeur commun disposé sur les gaz d'échappement immédiatement en sortie de la turbine de détente pour alimenter en vapeur d'eau à la fois le dispositif d'injection de vapeur d'eau disposé dans la zone d'air comburant comprimé située entre la sortie du compresseur d'air et l'entrée du brûleur, et le dispositif d'injection de vapeur d'eau disposé dans la chambre de combustion après la zone de combustion et avant les premières aubes de la turbine de détente.

Le système comprend avantageusement un récupérateur à condensation commun placé sur le parcours des gaz d'échappement de la turbine de détente et recueillant l'ensemble des chaleurs sensible et latente des gaz d'échappement, pour alimenter en condensats, un collecteur de condensats muni d'un dispositif de maintien et de contrôle de la qualité de l'eau qui alimente en eau liquide un réservoir de récupération. A partir de ce réservoir de récupération, il est prévu une canalisation d'alimentation du récupérateur-générateur-surchauffeur de vapeur en eau recyclée sous pression. A partir de ce même réservoir, l'eau liquide est recyclée à la fois vers le dispositif d'injection d'eau liquide disposé dans la zone d'air comburant comprimé située entre la sortie du compresseur d'air et l'entrée du brûleur et le dispositif d'injection d'eau liquide, disposé dans la chambre de combustion après la zone de combustion et avant les premières aubes de la turbine de détente.

Le récupérateur-générateur-surchauffeur de vapeur et le récupérateur à condensation sont disposés successivement dans cet ordre sur les gaz d'échappement en sortie de la turbine de détente.

Pour permettre la fourniture d'eau liquide sous pression, le système comprend en outre au moins une pompe disposée sur une conduite de recyclage de l'eau liquide issue du réservoir de récupération.

Selon un aspect particulier de l'invention, le récupérateur-générateur-surchauffeur de vapeur agissant sur les gaz d'échappement de la turbine de détente et disposé entre la sortie de la turbine de détente et le récupérateur à condensation, peut servir aussi bien à la production de vapeur pour un usage externe qu'à la production de vapeur servant à l'alimentation des dispositifs d'injection de vapeur d'eau au sein du système.

Le cas échéant, le système peut comprendre un brûleur d'appoint alimenté en gaz combustible et en air comburant et disposé sur le récupérateur-générateur-surchauffeur de vapeur.

Il est par ailleurs possible de prévoir des moyens d'alimentation des dispositifs d'injection d'eau liquide à partir d'une source d'eau externe.

L'invention s'applique également à des systèmes mettant en oeuvre des compresseurs d'air à plusieurs étages. Dans ce cas, plusieurs dispositifs d'injection d'eau liquide ou de vapeur d'eau peuvent être répartis entre les différents étages du compresseur.

L'invention peut aussi s'appliquer à des systèmes existants, par exemple à un ensemble de deux turbines à gaz pour lesquelles un seul compresseur est mis en oeuvre.

L'invention concerne ainsi également un système qui comprend des première et deuxième chambres de combustion équipées chacune d'un brûleur alimenté en fluide combustible gazeux et en air comburant et des première et deuxième turbines de détente auxquelles sont appliqués les gaz de combustion issus respectivement des première et deuxième chambres de combustion, un récupérateur-générateur-surchauffeur de vapeur unique, un récupérateur à condensation unique et un échangeur massique et thermique unique étant disposés successivement dans cet ordre sur les gaz d'échappement en sortie des première et deuxième turbines de détente, le compresseur d'air étant entraîné par lesdites première et deuxième turbines de détente, et un distributeur d'air comburant vers chacun des brûleurs associés aux première et deuxième chambres de combustion étant disposé en aval d'un dispositif d'injection de vapeur d'eau disposé dans la zone d'air comburant comprimé située en aval de la sortie du compresseur d'air et en aval d'un dispositif d'injection d'eau liquide disposé également dans la zone d'air comburant comprimé située en aval de la sortie du compresseur d'air, l'échangeur massique et thermique agissant entre les produits de combustion issus du récupérateur à condensation unique placé sur le parcours des gaz d'échappement des première et deuxième turbines de détente et l'air atmosphérique entrant pour permettre une préhumidification de l'air avant son entrée dans le compresseur.

D'une manière générale, le système selon l'invention permet de faire fonctionner des turbines à gaz en cycle semi ouvert, grâce à la réinjection, après contrôle de le qualité de l'eau, à différents niveaux, sous forme de vapeur et sous forme de liquide, de l'eau récupérée après condensation à l'issue du passage des gaz détendus dans un récupérateur à condensation, l'eau réinjectée constituant un ballast thermique en lieu et place de l'excès d'air habituel, de sorte qu'il est alors possible de n'utiliser en cas limite que l'air comburant strictement nécessaire à une combustion stoechiométrique.

Le dosage relatif dos quantités d'eau sous les deux états permet de maintenir optimales les conditions de pression et de température en sortie de compresseur et à l'entrée de la turbine de détente.

Parmi les avantages de l'invention, on peut noter en premier lieu la possibilité de réduire de façon significative, la taille du compresseur utilisé par rapport à la taille du compresseur d'une turbine à gaz traditionnelle, du fait qu'il n'est plus nécessaire d'introduire un excès d'air comprimé important dans la chambre de combustion.

Par ailleurs, à dimensions et conditions thermodynamiques données, la puissance mécanique utile de la turbine est accrue d'une façon substantielle, et on note un accroissement de l'ordre de 60% de la puissance par rapport à celle d'une turbine à gaz en cycle traditionnel.

Avec la mise en oeuvre d'un échangeur massique et thermique, encore appelé pompe à vapeur d'eau, le rendement thermique est encore accru pour toujours être supérieur au rendement d'une turbine à gaz traditionnelle, tandis que le rendement global thermique peut dépasser 90% PCS (PCS = pouvoir calorifique supérieur) s'il y a cogénération grâce à une récupération utile de chaleur latente et sensible maximale sur la vapeur d'eau.

Les mesures préconisées dans le cadre de la présente invention sont également très favorables du point de vue de la protection de l'environnement du fait que par rapport aux turbines à gaz connues l'air comburant est refroidi avant la combustion qui s'effectue à partir d'air humide, c'est-à-dire chargée en gaz inertes qui engendrent une température adiabatique de combustion diminuée.

Les deux facteurs précédents permettent d'envisager une réduction de la formation des oxydes d'azote (NOx) dans un rapport de l'ordre de 3 à 1.

Le système selon l'invention à cycle semi-ouvert peut s'appliquer à partir de turbo compresseurs existants, par exemple à partir d'une machine existante si l'on admet une légère surcharge de la turbine de détente ou à partir de deux machines sur lesquelles un seul compresseur est exploité.

D'autres caractéristiques et avantages de l'invention ressortiront de la description suivante de deux modes particuliers de réalisation, donnés à titre d'exemples non limitatifs, en référence aux dessins annexés, sur lesquels :
- la figure 1 est une vue schématique d'ensemble d'un système de cogénération à turbine à gaz naturel selon l'invention mettant en oeuvre un turbo-compresseur unique, et
- la figure 2 est une vue schématique d'ensemble d'un système de cogénération à turbine à gaz naturel selon l'invention mettant en oeuvre deux turbo-compresseurs mais utilisant un compresseur d'air unique.

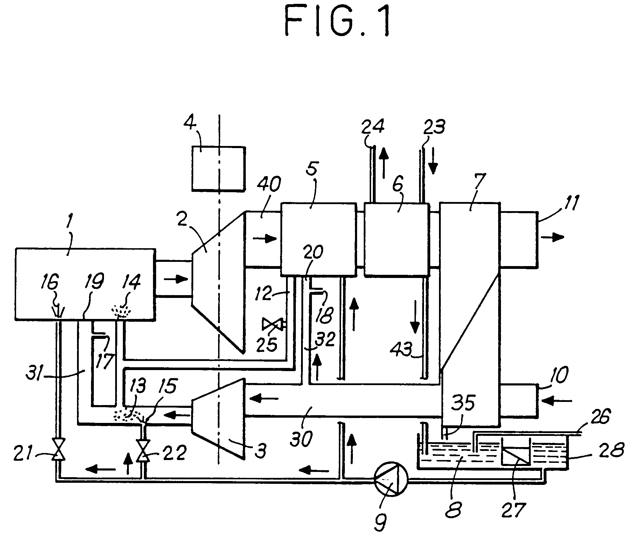

La figure 1 montre l'ensemble d'une installation selon l'invention permettant d'obtenir, à partir d'un combustible constitué par du gaz naturel, d'une part un travail mécanique sur un récepteur d'énergie mécanique 4 tel qu'un alternateur, obtenu à partir d'une turbine de détente 2, et d'autre part de l'énergie calorifique à partir des gaz chauds détendus issus de la turbine de détente 2.

L'installation de la figure 1 comprend de façon classique une chambre de combustion 1 équipée d'un brûleur 19 alimenté en gaz combustible à travers un injecteur 17 et en air comburant par une canalisation 31 d'alimentation en air comprimé. Les produits de combustion issus de la chambre de combustion 1 sont appliqués sur les aubes de la turbine de détente 2 qui assure l'entraînement à la fois du récepteur 4 et d'un compresseur d'air 3 servant à comprimer l'air atmosphérique provenant d'une conduite principale 30 pour fournir de l'air comprimé dans la canalisation 31.

Contrairement aux installations traditionnelles, le compresseur 3 peut présenter des dimensions réduites car, dans l'installation selon l'invention, il est suffisant de fournir au brûleur 19, à travers la canalisation 31, une quantité d'air comburant s'approchant de celle nécessaire à une combustion stoechiométrique. La puissance mécanique utile disponible à partir de la turbine de détente 2 peut ainsi être accrue de façon substantielle.

Afin de maintenir en sortie de la chambre de combustion 1, pour les gaz d'attaque de la turbine de détente 2, une température qui ne soit pas excessive pour les aubes de cette turbine, par exemple une température qui ne dépasse pas environ 1250°C avec une pression d'attaque de l'ordre de 15 bar, il est réalisé dans la chambre de combustion 1, conformément à l'invention, un ballast thermique à partir d'une injection d'eau sous forme vapeur et liquide.

Pour cela, un dispositif 13 d'injection de vapeur d'eau est situé entre la sortie du compresseur 3 et le brûleur 19, comme représenté sur la figure 1.

Un dispositif 14 d'injection de vapeur d'eau est par ailleurs disposé sur la chambre de combustion 1 après la zone de combustion et avant les premières aubes de la turbine de détente 2.

Un premier dispositif 15 d'injection d'eau liquide est disposé sur la canalisation 31 reliant la sortie du compresseur 3 au brûleur 19, par exemple en amont du dispositif 13 d'injection de vapeur d'eau.

Un second dispositif 16 d'injection d'eau liquide est avantageusement disposé sur la chambre de combustion 1 de façon à pouvoir injecter de l'eau directement dans la chambre de combustion 1, mais après la zone de combustion et avant les premières aubes de la turbine de détente 2.

Des robinets de réglage 21,22 permettent d'ajuster la quantité d'eau injectée par les dispositifs d'injection 15,16 afin d'optimiser les conditions de fonctionnement.

En jouent sur les proportions d'eau liquide et vapeur injectées dans la zone de compression, d'une part entre la sortie du compresseur 3 et l'entrée du brûleur 19, et d'autre part directement dans la chambre de combustion 1, il est possible de réaliser un ballast thermique suffisant dans la chambre de combustion 1, de manière à éviter tout excès d'air, tout en maintenant optimales les conditions de pression et de température en sortie du compresseur 3 et à l'entrée de la turbine de détente 2.

Dans le cas où le compresseur d'air 3 comprend plusieurs étages, il est possible de disposer plusieurs dispositifs 15,13 d'injection d'eau sous forme liquide et vapeur répartis entre les différents étages du compresseur d'air pour tendre à une compression isotherme.

Une ou plusieurs pompes 9 sont disposées sur les canalisations d'alimentation en eau liquide des dispositifs 15,16 d'injection d'eau liquide ou du récupérateur-générateur-surchauffeur de vapeur 5 pour permettre à l'eau liquide d'être portée à la pression nécessaire à sa pulvérisation ou à sa pression de vaporisation.

On voit sur la figure 1 qu'un dispositif 5 récupérateurgénérateur-surchauffeur de vapeur est mis en place sur le conduit 40 d'évacuation des gaz d'échappement à la sortie de la turbine de détente 2. La vapeur d'eau produite dans le dispositif récupérateur 5 est évacuée par une canalisation 12 d'une part vers une vanne 25 de sortie de vapeur pour un usage externe et d'autre part vers les dispositifs 13 et 14 d'injection de vapeur. La vanne 25 permet entre autres de régler le débit de vapeur d'eau appliqué aux dispositifs 13 et 14 d'injection de vapeur de même que les robinets de réglage 21,22 permettent d'ajuster les débits d'eau liquide injectés par les dispositifs d'injection 15,16.

A titre d'option, un brûleur à gaz d'appoint 20 peut être adjoint au dispositif 5 récupérateur-générateur-surchauffeur de vapeur pour optimiser la formation de la vapeur nécessaire à l'alimentation des dispositifs d'injection 13,14. Le brûleur d'appoint 20 est associé à un dispositif 18 d'injection de gaz combustible et à une conduite 32 d'alimentation en air comburant humidifié provenant de la pompe à vapeur 7, qui peut être une conduite de dérivation de la conduite principale 30 d'alimentation du compresseur 3 en air atmosphérique.

Un dispositif récupérateur 6 à condensation est disposé en aval du dispositif 5 récupérateur-générateur-surchauffeur de vapeur, sur la conduite 40 des gaz de sortie de la turbine de détente 2. Le dispositif récupérateur condenseur 6 comprend une entrée 23 et une sortie 24 pour un fluide caloriporteur externe, ainsi qu'une sortie 43 pour des condensats qui sont envoyés dans un bec 8 collecteur de condensats.

Une canalisation 26 débouche également dans le collecteur 8 de condensats. Cette canalisation 26 constitue un retour pour les condensats engendrés à l'extérieur du système en cas d'usage externe de la vapeur disponible sur la vanne 25.

Un dispositif 27 est associé au collecteur 8 de condensats pour contrôler la qualité de l'eau et réguler notamment le pH. Les condensats du collecteur 8 ayant transité dans le dispositif 27 régulateur de pH sont collectés dans un réservoir 28 formant une bâche d'eau prête à être réinjectée dans le système à travers la pompe 9 pour alimenter en eau liquide aussi bien les dispositifs d'injection 15,16 à travers les robinets de réglage 21, 22, que le dispositif 5 récupérateur-générateur-surchauffeur de vapeur.

En cas de besoin, notamment dans une phase de démarrage, le réservoir 28 peut recevoir un apport d'eau liquide à partir d'une source extérieure au système. En fonctionnement normal, le système est toutefois autosuffisant et est même excédentaire en eau.

Selon un aspect important de la présente invention, il est incorporé dans le système un échangeur massique et thermique 7 entre les gaz d'échappement sortant des récupérateurs 5 et 6 dans la canalisation 40 pour être évacués vers une sortie 11 de gaz brûlés, et l'air frais entrant dans la canalisation principale 30 à partir d'une entrée 10 d'air atmosphérique.

Divers exemples d'échangeurs massiques et thermiques, encore dénommés pompes à vapeur d'eau, qui permettent de recycler avec l'air comburant nécessaire à un process thermique une part plus ou moins grande de l'énergie sensible et latente contenue dans les produits de combustion sortant des générateurs à condensation, sont connus par exemple par le document FR-B-2 446 460, ou le document FR-B-2508616, et sont encore décrits par exemple dans la demande de brevet français 89 13945.

La mise en oeuvre d'une pompe à vapeur d'eau 7 permet un recyclage ultime d'enthalpie par préhumidification de l'air atmosphérique introduit par l'entrée d'air 10 dans la conduite principale 30, avant l'entrée de l'air dans le compresseur 3.

Cette préhumidification de l'air atmosphérique et, d'une façon générale la mise en oeuvre de la pompe à vapeur d'eau 7, permet ainsi d'améliorer encore les performances du cycle du double point de vue des performances thermo-dynamiques et énergétiques globales et de la diminution des oxydes d'azote produits. Sur la figure 1, on voit que les condensats en excès de la pompe à vapeur d'eau 7 sont envoyés dans le collecteur 8 de condensats par un conduit.

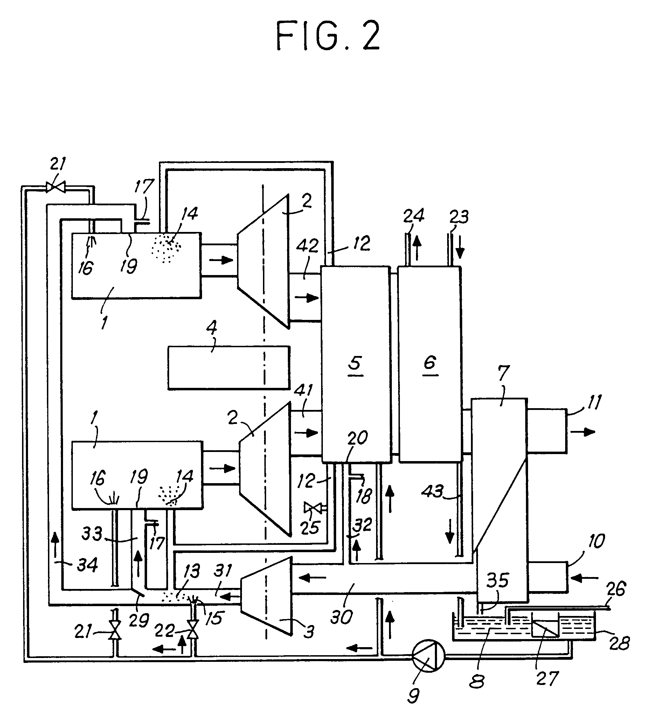

On décrire maintenant en référence à la figure 2 une application de la présente invention à une installation comprenant deux turbocompresseurs.

Comme on peut le voir sur la figure 2, il est possible de n'utiliser dans ce cas qu'un seul compresseur d'air 3 tout en mettant en oeuvre deux turbines de détente 2 associées à deux chambres de combustion 1 pour augmenter la puissance mécanique disponible en sortie sur un ou plusieurs récepteurs 4.

Le schéma de la figure 2 est très semblable à celui de la figure 1 et les éléments communs portent les mêmes numéros de référence et ne seront pas décrits à nouveau.

La conduite 31 d'alimentation en air sous pression située en sortie du compresseur 3 et dans laquelle est injectée de l'eau sous forme de liquide et de vapeur par les dispositifs d'injection 15,13 se divise en deux conduites secondaires 33,34 qui servent chacune à l'alimentation du brûleur 19 de l'une des chambres de combustion 1 en air comburant. Un volet de distribution 29 est disposé au niveau du raccordement des conduites secondaires 33,34 à la conduite principale 31 pour réguler la distribution d'air humidifié sous pression vers chacun des brûleurs 19.

Chacune des chambres de combustion 1 est par ailleurs munie d'un dispositif 16 d'injection d'eau liquide, à partir de l'eau contenue dans le réservoir 28 et d'un dispositif 14 d'injection de vapeur d'eau fournie par une canalisation 12 à partir d'un dispositif 5 récupérateur-générateur-surchauffeur de vapeur recevant l'ensemble des gaz détendus fournis par les deux turbines de détente 2 à travers des conduites 41,42. Un dispositif 6 récupérateur à condensation est également placé en cascade avec le dispositif 5 récupérateur-générateur-surchauffeur de vapeur, en aval de celui-ci, comme dans le cas de la figure 1.

Les gaz de combustion détendus issus du dispositif 6 récupérateur à condensation sont ensuite envoyés vers la sortie 11 d'évacuation des gaz brûlés à travers une pompe à vapeur d'eau 7, comme dans le cas du schéma de la figure 1.

Pour mieux faire ressortir les avantages des systèmes à turbines à gaz naturel et vapeur d'eau fonctionnent en cycle semi-ouvert conformément à la présente invention, par rapport à des turbines à gaz traditionnelles, on donne dans le tableau ci-dessous les performances comparées de différents modes de réalisation du système à turbine à gaz naturel et vapeur d'eau selon l'invention, référencés TGV 0, TGV 40, TGV 55 et TGV 70 par rapport à une turbine à gaz classique TG, dans les mêmes conditions de température et de pression à l'entrée de la turbine de détente 2 (1250°C, 15 bar).

## TABLEAU

| Configurations | TG | TGVO | TGV40 | TGV55 | TGV70 |
|---|---|---|---|---|---|
| Température air comburant saturé en sortie de la pompe à vapeur – | – | sans PAV | 40 (°C) | 55 (°C) | 70 (°C) |
| Facteur d'air optimal | 2,70 | 1,80 | 1,70 | 1,50 | 1,15 |
| T.E. (%PCS) | 73 | 69 | 78 | 90 | 96 |
| Rm 0.85 (%Pci) | 34,4 | 42 | 42 | 41 | 40 |
| effet NOx | – | – | -30% (mini probable) | -60% (mini probable) | |
| Td 0.85 | 1 | 0,83 | 0,89 | 0,91 | 0,89 |
| Tc 0.85 | 1 | 0,52 | 0,60 | 0,62 | 0,62 |

Les abréviations utilisées dans le tableau sont explicitées ci-dessous.

TG : Turbine à Gaz de l'art antérieur, qui constitue ici la référence

TGVO : Turbine à gaz naturel et vapeur d'eau sans pompe à vapeur

TGV40 ) Turbine à gaz naturel et vapeur d'eau avec pompe à vapeur

TGV55 ) produisant de l'air comburant saturé à 40°C, respective-

TGV70 ) ment 55°C et 70°C en sortie de pompe à vapeur

T.E. : bilan énergique total (sur Pcs et dans le cas où la chaleur récupérée dans le récupérateur à condensation chauffe de l'eau de 65 à 85°C)

```
Rm 0,85 : rendement  mécanique  de  la   turbine  si  le  rendement
                 polytropique  de la turbine de détente et du  compresseur
est pour chacun 0,85 (rendement sur PCi) PCi = Pouvoir  Calorifique
inférieur.
effet NOx : réduction minimale probable de la formation des NOx
                 par rapport à la turbine à gaz TG
Td 0,85 et Tc 0,85 : Taille respectivement de la turbine de détente
                 et  du  compresseur, comparée à  celle  de  la
                 version  TG.
```

**Revendications**

1.  Système à turbine à gaz naturel et vapeur d'eau fonctionnant en cycle semi-ouvert comprenant au moins une chambre de combustion (1) équipée d'un brûleur (19) alimenté d'une part en fluide combustible gazeux et d'autre part en air comburant, une turbine de détente (2) munie d'aubes à laquelle sont appliqués les gaz de combustion, un compresseur d'air (3) entraîné par la turbine de détente (2) pour comprimer le flux d'air comburant appliqué audit brûleur (19) et des moyens de couplage de la turbine de détente (2) à au moins un récepteur externe (4) d'énergie mécanique, caractérisé en ce qu'il comprend un échangeur massique et thermique (7) entre les produits de combustion issus d'un récupérateur à condensation (6) placé sur le parcours des gaz d'échappement de la turbine de détente (2) et l'air atmosphérique entrant pour permettre une préhumidification de l'air avant son entrée dans le compresseur (3).

2.  Système selon la revendication 1, caractérisé en ce qu'il comprend un récupérateur à condensation (6) commun placé sur le parcours des gaz d'échappement de la turbine de détente (2) et recueillant l'ensemble des chaleurs sensible et latente des gaz d'échappement, pour alimenter en condensats, un collecteur (8) de condensats muni d'un dispositif (27) de maintien et de contrôle de la qualité de l'eau qui alimente en eau liquide un réservoir de récupération (28).

3.  Système selon la revendication 2, caractérisé en ce qu'il comprend un dispositif (15) d'injection d'eau liquide disposé dans la zone d'air comburant comprimé située entre la sortie du compresseur d'air (3) et l'entrée du brûleur (19), l'eau liquide étant obtenue à partir du réservoir de récupération (28).

4.  Système selon la revendication 2 ou la revendication 3, caractérisé en ce qu'il comprend un dispositif (16) d'injection d'eau liquide disposé dans la chambre de combustion (1) après la zone de combustion et avant les premières aubes de la turbine de détente (2), l'eau liquide étant obtenue à partir du réservoir de récupération (28).

5.  Système selon la revendication 2, caractérisé en ce qu'il comprend un récupérateur-générateur-surchauffeur de vapeur (5) commun disposé sur les gaz d'échappement immédiatement en sortie de la turbine de détente (2) et une canalisation d'alimentation du récupérateur-générateur-surchauffeur de vapeur (5) en eau recyclée à partir de l'eau contenue dans ledit réservoir de récupération (28).

6.  Système selon la revendication 5, caractérisé en ce qu'il comprend un dispositif (13) d'injection de vapeur d'eau disposé dans la zone d'air comburant comprimé située entre la sortie du compresseur d'air (3) et l'entrée du brûleur (19), la vapeur d'eau injectée étant produite par le récupérateur-générateur-surchauffeur de vapeur (5) commun disposé sur les gaz d'échappement immédiatement en sortie de la turbine de détente (2).

**7.** Système selon la revendication 5 ou la revendication 6, caractérisé en ce qu'il comprend un dispositif (14) d'injection de vapeur d'eau disposé dans la chambre de combustion (1) après la zone de combustion et avant les premières aubes de la turbine de détente (2), la vapeur d'eau injectée étant produite par le récupérateur-générateur-surchauffeur de vapeur (5) commun disposé sur les gaz d'échappement immédiatement en sortie de la turbine de détente (2).

**8.** Système selon la revendication 2 et la revendication 5, caractérisé en ce que le récupérateur-générateur-surchauffeur de vapeur (5) et le récupérateur à condensation (6) sont disposés successivement dans cet ordre sur les gaz d'échappement en sortie de la turbine de détente (2).

**9.** Système selon la revendication 2, caractérisé en ce qu'il comprend en outre au moins une pompe (9) disposée sur une conduite de recyclage de l'eau liquide issue du réservoir de récupération (28).

**10.** Système selon l'une quelconque des revendications 5 à 8, caractérisé en ce qu'il comprend en outre un brûleur d'appoint (20) alimanté en gaz combustible et en air comburant et disposé sur le récupérateur-générateur-surchauffeur de vapeur (5).

**11.** Système selon l'une quelconque des revendications 3 et 4, caractérisé en ce qu'il comprend en outre des moyens pour alimenter chaque dispositif (15,16) d'injection d'eau liquide à partir d'une source d'eau externe.

**12.** Système selon l'une quelconque des revendications 1 à 11, caractérisé en ce qu'il comprend un compresseur (3) à plusieurs étages et plusieurs dispositifs (15,13) d'injection d'eau liquide et de vapeur d'eau répartis entre les différents étages du compresseur (3).

**13.** Système selon l'une quelconque des revendications 1 à 12, caractérisé en ce qu'il comprend des première et deuxième chambres de combustion (1) équipées chacune d'un brûleur (19) alimenté en fluide combustible gazeux et en air comburant et des première et deuxième turbines de détente (2) auxquelles sont appliqués les gaz de combustion issus respectivement des première et deuxième chambres de combustion (1), un récupérateur-générataur-surchauffeur de vapeur (5) unique, un récupérateur à condensation (6) unique et un échangeur massique et thermique (7) unique étant disposés successivement dans cet ordre sur les gaz d'échappement en sortie des première et deuxième turbines de détente (2), un compresseur d'air (3) étant entraîné par lesdites première et deuxième turbines de détente (2), et un distributeur (29) d'air comburant vers chacun des brûleurs (19) associés aux première et deuxième chambres de combustion (1) étant disposé en aval d'un dispositif (13) d'injection de vapeur d'eau disposé dans la zone d'air comburant comprimé située en aval de la sortie du compresseur d'air (3) et en aval d'un dispositif (15) d'injection d'eau liquide disposé également dans la zone d'air comburant comprimé située en aval de la sortie du compresseur d'air (3), l'échangeur massique et thermique (7) agissant entre les produits de combustion issus du récupérateur à condensation (6) unique placé sur le parcours des gaz d'échappement des première et deuxième turbines de détente (2) et l'air atmosphérique entrant pour permettre une préhumidification de l'air avant son entrée dans le compresseur (3).

**Claims**

**1.** Turbine system using natural gas and steam operating in a semi-open cycle and comprising at least one combustion chamber (1) fitted with a burner (19) fed firstly with gaseous fuel and secondly with oxidizing air, an expansion turbine (2) having blades to which the combustion gases are applied, an air compressor (3) driven by the expansion turbine (2) to compress flow of oxidizing air applied to said burner (19), and means for coupling the expansion turbine (2) to at least one external receiver (4) of mechanical energy,
characterized in that it comprises a mass and heat exchanger (7) for exchanges between the combustion products coming from a condensation recuperator (6) placed on the path of the exhaust gases from the expansion turbine (2) and the incoming atmospheric air to enable the air to be pre-moistened prior to entering the compressor (3).

**2.** System according to claim 1, characterized in that it comprises a common condensation recuperator (6) placed on the path of the exhaust gases from the expansion turbine (2) and collecting both the sensible heat and the latent heat of the exhaust gases to feed a condensate collector (8) with condensates, the condensate collector being provided with a device (27) for maintaining and controlling quality of the water fed as liquid water to a recuperation tank (28).

3. System according to claim 2, characterized in that it comprises a liquid water injection device (15) disposed in the compressed oxidizing air zone situated between the outlet from the air compressor (3) and the inlet of the burner (19), the liquid water being obtained from the recuperation tank (28).

4. System according to claim 2 or claim 3, characterized in that it comprises a liquid water injection device (16) disposed in the combustion chamber (1) after the combustion zone and before the first blades of the expansion turbine (2), the liquid water being obtained from the recuperation tank (28).

5. System according to claim 2, characterized in that it comprises a common steam recuperator-generator-superheater (5) disposed on the exhaust gases immediately on leaving the expansion turbine (2), and a duct feeding the steam recuperator-generator-superheater (5) with recycled water taken from the water contained in said recuperation tank (28).

6. System according to claim 5, characterized in that it comprises a steam injection device (13) disposed in the compressed oxidizing air zone situated between the outlet of the air compressor (3) and the inlet of the burner (19), the injected steam being produced by the common steam recuperator-generator-superheater (5) disposed on the exhaust gases immediately on leaving the expansion turbine (2).

7. System according to claim 5 or claim 6, characterized in that it comprises a steam injection device (14) disposed in the combustion chamber (1) after the combustion zone and before the first blades of the expansion turbine (2), the injected steam being produced by the common steam recuperator-generator-superheater (5) disposed on the exhaust gases immediately on leaving the expansion turbine (2).

8. System according to claim 2 and claim 5, characterized in that the steam recuperator-generator-superheater (5) and the condensation recuperator (6) are disposed in succession in that order on the exhaust gases leaving the expansion turbine (2).

9. System according to claim 2, characterized in that it further comprises at least one pump (9) disposed on a duct for recycling liquid water from the recuperation tank (28).

10. System according to any one of claims 5 to 8, characterized in that it further comprises an additional burner (20) provided with fuel gas and with oxidizing air and disposed on the steam recuperator-generator-superheater (5).

11. System according to any one of claims 3 and 4, characterized in that it further comprises means for feeding each of the liquid water injection devices (15, 16) from an external source of water.

12. System according to any one of claims 1 to 11, characterized in that it comprises a multi-stage compressor (3) and a plurality of liquid water and steam injection devices (15, 13) distributed between the various stages of the compressor (3).

13. System according to any one of claims 1 to 12, characterized in that it comprises first and second combustion chambers (1) each fitted with its own burner (19) fed with gaseous fuel and with oxidizing air, and first and second expansion turbines (2) to which the combustion gases from the first and second combustion chambers (1) respectively are applied, a single steam recuperator-generator-superheater (5), a single condensation recuperator (6), and a single mass and heat exchanger (7) all disposed in succession and in that order on the exhaust gases leaving the first and second expansion turbines (2), an air compressor (3) driven by said first and second expansion turbines (2), and an oxidizing air distributor (29) for distributing air to each of the burners (19) associated with the first and second combustion chambers (1), the distributor being disposed downstream from a steam injection device (13) disposed in the compressed oxidizing air zone situated downstream from the outlet of the air compressor (13) and downstream from a liquid water injection device (15) likewise disposed in the compressed oxidizing air zone situated downstream from the outlet of the air compressor (3), the mass and heat exchanger (7) acting between the combustion products from the sole condensation recuperator (6) placed on the path of the exhaust gases from the first and second expansion turbines (2) and incoming atmospheric air to enable the air to be pre-moistened prior to entering the compressor (3).

**Patentansprüche**

1. Turbinensystem für Erdgas und Wasserdampf, das mit halb geschlossenem Kreislauf betrieben wird und wenigstens eine Brennkammer (1) enthält, die mit einem Brenner (19) ausgestattet ist, der einerseits mit einem gasförmigen, brennbaren Fluid und andererseits mit sauerstoffhaltiger Luft versorgt wird, sowie eine mit Laufschaufeln ausgestattete Abspannturbine (2), auf die die Feuerungsgase wirken, einen durch die Abspannturbine (2) angetriebenen Luftverdichter (3) zum Komprimieren des sauerstoffhaltigen und dem Brenner (19) zugeführten Luftstroms und einer Einrichtung zum Verbinden der Abspannturbine (2) mit wenigstens einem externen Abnehmer (4) mechanischer Energie, dadurch **gekennzeichnet**, daß es einen zwischen den aus einem in der Strecke der Austrittsgase der Abspannturbine (2) angeordneten Kondensationswärmetauscher (6) austretenden Verbrennungsprodukten und der eintretenden Außenluft wirkenden Masse- und Wärmeübertrager (7) enthält, damit ein Voranfeuchten der Luft vor ihrem Eintritt in den Verdichter (3) ermöglicht wird.

2. System gemäß Anspruch 1, dadurch gekennzeichnet, daß es einen Kondensationswärmetauscher (6) enthält, der in der Strecke der Austrittsgase der Abspannturbine (2) angeordnet ist und die gesamte freie und gebundene Wärme der Austrittsgase aufnimmt, um ein Kondenswasserauffanggefäß (8) mit Kondenswasser zu versorgen, das mit einer Vorrichtung (27) zum Aufrechterhalten und Kontrollieren der Wasserqualität ausgestattet ist und ein Wiederverwertesammelbecken (28) mit flüssigem Wasser versorgt.

3. System gemäß Anspruch 2, dadurch gekennzeichnet, daß es eine Vorrichtung (15) zum Einspritzen flüssigen Wassers enthält, das in dem Bereich der sauerstoffhaltigen und komprimierten Luft angeordnet ist, die zwischen dem Ausgang des Luftverdichters (3) und dem Einlaß des Brenners (19) liegt, wobei das flüssige Wasser teilweise aus dem Wiederverwertesammelbecken (28) gewonnen wird.

4. System gemäß dem Anspruch 2 oder 3, dadurch gekennzeichnet, daß es eine Vorrichtung (16) für das Einspritzen flüssigen Wassers enthält, die in der Brennkammer (1) hinter der Verbrennungsbereich und vor den ersten Laufschaufeln der Abspannturbine (2) angeordnet ist, wobei das flüssige Wasser zum Teil aus dem Wiederverwertesammelbecken (28) aufgenommen wird.

5. System gemäß dem Anspruch 2, dadurch gekennzeichnet, daß es einen Dampf-Verwerter/Erzeuger/Überhitzer (5) enthält, der unmittelbar am Ausgang der Abspannturbine (2) so angeordnet ist, daß er alle Austrittsgase erfaßt, sowie einen Kanal zum Versorgen des Dampf-Verwerter/Erzeuger/Überhitzers (5) mit Wasser, das zum Teil aus dem in dem besagten Wiederverwertesammelbecken (28) enthaltenen Wasser rückgeführt wird.

6. System gemäß Anspruch 5, dadurch gekennzeichnet, daß es eine Vorrichtung (13) zum Einspritzen von Wasserdampf enthält, die in dem zwischen dem Ausgang des Luftverdichters (3) und dem Eingang des Brenners (19) liegenden Bereich der komprimierten sauerstoffhaltigen Luft angeordnet ist, wobei der eingespritzte Wasserdampf von dem unmittelbar am Ausgang der Abspannturbine (2) angeordneten und alle Austrittsgase erfassenden Dampf -Verwerter/Erzeuger/Überhitzer (5) erzeugt wird.

7. System gemäß dem Anspruch 5 oder dem Anspruch 6, dadurch gekennzeichnet, daß

11

es eine Vorrichtung (14) zum Einspritzen von Wasserdampf enthält, die in der Brennkammer (1) nach dem Verbrennungsbereich und vor den ersten Laufschaufeln der Abspannturbine (2) angeordnet ist, wobei der eingespritzte Wasserdampf von dem unmittelbar am Ausgang der Abspannturbine (2) angeordneten und alle Austrittsgase erfassenden Dampf-Verwerter/Erzeuger/Überhitzer (5) erzeugt wird.

8.  System gemäß Anspruch 2 und 5,
    dadurch gekennzeichnet, daß
    der Dampf-Verwerter/Erzeuger/Überhitzer (5) und der Kondensationswärmetauscher (6) in dieser Folge hintereinander angeordnet sind, so daß sie die Austrittsgase am Ausgang der Abspannturbine (2) erfassen.

9.  System gemäß Anspruch 2,
    dadurch gekennzeichnet, daß
    sie weiterhin wenigstens eine Pumpe (9) enthält, die in einer Rückführleitung für flüssiges Wasser montiert ist, das aus dem Wiederverwertesammelbecken (28) stammt.

10. System gemäß einem der Ansprüche 5 bis 8,
    dadurch gekennzeichnet, daß
    es weiterhin einen Hilfsbrenner (20) enthält, der mit brennbarem Gas und sauerstoffhaltiger Luft versorgt wird und bei dem Dampf-Verwerter/Erzeuger/Überhitzer (5) angeordnet ist.

11. System gemäß einem der Ansprüche 3 und 4,
    dadurch gekennzeichnet, daß
    es weiterhin Mittel zum teilweisen Versorgen jeder Einspritzvorrichtung (15, 16) mit flüssigem Wasser aus einer externen Wasserquelle enthält.

12. System gemäß einem der Ansprüche 1 bis 11,
    dadurch gekennzeichnet, daß
    es einen Mehrstufenverdichter (3) enthält, sowie mehrere Einspritzvorrichtungen (15, 13) für flüssiges Wasser, die auf die einzelnen Stufen des Verdichters (3) aufgeteilt sind.

13. System gemäß einem der Ansprüche 1 bis 12,
    dadurch gekennzeichnet, daß
    es erste und zweite Brennkammern (1) enthält, die jeweils mit einem Brenner (19) versehen sind und durch gasförmige brennbare Fluide und mit sauerstoffhaltiger Luft versorgt werden, sowie eine erste und eine zweite Abspannturbine (2), auf die die jeweils von der ersten und der zweiten Brennkammer (1) abgegebenen Feuerungsgase wirken, einen einzigen Dampf -Verwerter/Erzeuger/Überhitzer (5), einen einzigen Kondensationswärmetauscher (6) und einen einzigen Masse- und Wärmeübertrager (7), die in dieser Abfolge aufeinanderfolgend und die Austrittsgase am Ausgang der ersten und zweiten Abspannturbine (2) erfassend angeordnet sind, einen Luftverdichter (3), der durch die besagte erste und zweite Abspannturbine (2) angetrieben wird, und einen Verteiler (29) zum Verteilen sauerstoffhaltiger Luft auf die der ersten und zweiten Brennkammer (1) zugeordneten Brenner (19), der einer Einspritzvorrichtung (13) für Wasserdampf nachgeschaltet ist, die in dem Bereich der komprimierten sauerstoffhaltigen Luft angeordnet ist, der hinter dem Ausgang des Luftverdichters (3) liegt sowie hinter der ebenfalls in dem Bereich der komprimierten sauerstoffhaltigen Luft hinter dem Ausgang des Luftverdichters (3) liegenden Einspritzvorrichtung (15) für flüssiges Wasser, wobei der Masse- und Wärmeübertrager (7) zwischen den vom einzigen Kondensationswärmeaustauscher (6), der in der Strecke der Austrittsgase der ersten und zweiten Abspannturbine (2) angeordnet ist, ausgehenden Verbrennungsprodukten und der eintretenden Außenluft wirkt, damit eine Voranfeuchtung der Luft vor ihrem Eintritt in den Verdichter (3) ermöglicht wird.

# FIG.1

# FIG. 2